Europäisches Patentamt

European Patent Office

Office européen des brevets

(19)

(11) **EP 1 571 132 A2**

(12) **EUROPEAN PATENT APPLICATION**

(43) Date of publication:
07.09.2005 Bulletin 2005/36

(51) Int Cl.⁷: **C03B 37/027**, C03C 25/10

(21) Application number: 04021568.3

(22) Date of filing: 10.09.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 02.03.2004 KR 2004013921

(71) Applicant: SAMSUNG ELECTRONICS CO., LTD.
Gyeonggi-do (KR)

(72) Inventors:
• Oh, Sung-Koog
Yeongtong-gu, Suwon-si, Gyeonggi-do (KR)
• Kim, Young-Seok
Yeongtong-gu, Suwon-si, Gyeonggi-do (KR)
• Lee, Jae-Ho
Yeongtong-gu, Suwon-si, Gyeonggi-do (KR)

(74) Representative: Lang, Johannes
Bardehle Pagenberg Dost
Altenburg Geissler Isenbruck
Postfach 86 06 20
81633 München (DE)

(54) **Method and apparatus for drawing an optical fibre**

(57)    A method for drawing an optical fiber is provided in which a plurality of coating layers having a different viscosity is formed on the outer peripheral surface of a first optical fiber drawn from an optical fiber perform, then a second optical fiber with the coating layers formed thereon is drawn in a slanted direction relative to the drawing axis of the first optical fiber to form a third optical fiber incorporating a twist.

FIG.1

**Description**

**BACKGROUND OF THE INVENTION**

1. Field of the Invention

The present invention relates to an apparatus and a method for fabricating an optical fiber from an optical fiber preform and, more particularly, to an apparatus and a method for drawing an optical fiber.

2. Description of the Related Art

Optical fibers are advantageous in that they provide a high transmission rate and transmit/receive a large amount of optical signals. However, they are vulnerable to a polarization mode dispersion phenomenon, which disperses optical signals that are propagating inside the fiber. This increases a bit error rate of the optical signals and limits the capacity and rate for transmitting optical signals.

The polarization mode dispersion is caused by geometrical deformation in the optical fiber structure, residual stress therein, and the like. These factors cause a deformation in the optical fibers, the refractive index of which is changed irregularly. When the optical signals propagate through the abnormal areas, the refractive index of which is changed irregularly, and the angle and velocity of the components, which compose the optical signals, undergo irregular changes. Such changes in the angle and velocity of the components, which compose the optical signals, is one of the factors that cause the polarization mode dispersion phenomenon on the optical signals. The polarization mode dispersion is also caused by external environmental factors, such as changes in external temperature.

In an effort to minimize the polarization mode dispersion, it has been suggested to twist the optical fibers. Methods for twisting optical fibers involves rotating an optical fiber preform, from which optical fibers are drawn, as disclosed in International Patent Application WO 83/00232 of David et. al., entitled "Central electricity generating board." A method wherein a drawn optical fiber is endowed with a rotational force using a rotating or vibrating device, which is positioned on a drawing path of the optical fiber, is well disclosed in a number of U.S. Patents: No. 5,298,047, entitled "Method of making a fiber having low polarization mode dispersion due to a permanent spin," as well as No. 5,418,881; No. 5,704,960; No. 5,943,466; and No. 6,148,131 (the contents of which are hereby incorporated by reference). In addition, U.S. Patent No. 6,189,343 of Franco Cocchini et. al., entitled "Apparatus and method for forming an optical fiber" (the contents of which are hereby incorporated by reference) discloses a method wherein an optical fiber, which is coated with an external coating, is made to incorporate a twist by rotating a coating device, which is adapted to coat a bare optical fiber (that is, an optical fiber which is not coated with a coating layer).

According to the above-mentioned methods, an optical fiber is made to incorporate a twist during a drawing process to suppress the polarization mode dispersion of the optical fiber. To this end, it is suggested to apply a helicity to the optical fiber so that it is made to incorporate twists having opposite directions, by repeatedly providing the optical fiber with a rotational force leftward and rightward about an axis along which the optical fiber is drawn.

However, such a method has a problem in that, if an optical fiber is subject to a repeated rotational force leftward and rightward for forming twists having opposite directions, the geometrical structure of the optical fiber tends to become unstable.

**SUMMARY OF THE INVENTION**

Accordingly, the present invention has been made to solve the above-mentioned problems occurring in the prior art and provides additional advantages, by providing a method of drawing an optical fiber, wherein the polarization mode dispersion of the optical fiber is suppressed and the geometrical structure thereof is improved.

In one aspect of the invention, there is provided a method for drawing an optical fiber by heating one end of an optical fiber preform and drawing an optical fiber from the heated preform. The method includes: a coating step for forming a plurality of coating layers, which have different viscosity, on the outer peripheral surface of a first optical fiber, which is drawn from the optical fiber preform; and a twisting step for drawing a second optical fiber, which has coating layers formed thereon in a direction slanted relative to the drawing axis of the first optical fiber to form a third optical fiber incorporating a twist.

**BRIEF DESCRIPTION OF THE DRAWINGS**

The above features and advantages of the present invention will be more apparent from the following detailed description taken in conjunction with the accompanying drawings, in which:

FIG. 1 shows the construction of an apparatus for drawing an optical fiber according to the present invention;

FIG. 2 shows the construction of a spin unit shown in FIG. 1;

FIG. 3 shows the wet-on-wet type construction of a coating unit shown in FIG. 1;

FIG. 4 shows the wet-on-dry type construction of a coating unit shown in FIG. 1;

FIG. 5 is a sectional diagram showing a first optical fiber shown in FIG. 1;

FIG. 6 is a sectional diagram showing a second optical fiber shown in FIG. 1;

FIG. 7 is a graph illustrating the distribution of the means and the standard deviations of the polarization mode dispersion values of optical fibers according to the present invention;

FIG. 8 is a graph illustrating the difference between the present invention and the prior art in terms of changes in diameter vs. length of optical fibers; and,

FIG. 9 is a graph illustrating the relationship between polarization mode dispersion and the number of turns in accordance with the changes in the intensity of a UV lamp.

## DETAILED DESCRIPTION

Hereinafter, embodiments of the present invention will be described with reference to the accompanying drawings. For the purposes of clarity and simplicity a detailed description of known functions and configurations incorporated herein will be omitted as it may make the subject matter of the present invention unclear.

According to the present invention, a method for drawing an optical fiber by heating one end of an optical fiber preform and drawing an optical fiber from the heated preform is provided. The method involves a coating step and a twisting step. In the coating step, a first optical fiber is coated. In the twisting step, the second optical fiber having coating layers is drawn with a predetermined angle slanted relative to the drawing axis of the first optical fiber to form a third optical fiber incorporating a twist.

The first optical fiber is an optical fiber just drawn from an optical fiber preform and includes a core, which is positioned in its center portion, and a clad, which surrounds the outer peripheral surface of the core. The second optical fiber includes coating layers, which are formed on the outer peripheral surface of the first optical fiber. The third optical fiber is obtained by making the second optical fiber incorporate a twist, which has the coating layers formed thereon.

In the coating step, the outer peripheral surface of the first optical fiber is coated with coating liquids having a different viscosity a number of times to obtain a second optical fiber, which has coating layers formed thereon. If a coating layer, which has the same viscosity as that of the first optical fiber, is formed on the outer peripheral surface of the first optical fiber, every twist that is applied to the second optical fiber, during the twisting step, is supposed to be applied to the clad. Accordingly, the coating layers should include a plurality of layers, which have a different viscosity, so that the degree of twist that is applied to the second optical fiber is regulated. By regulating the viscosity of each of the coating layers, the residual twist applied to the third optical fiber is regulated accordingly.

Each of the coating layers of the second optical fiber is formed using a coating liquid, the viscosity of which is gradually decreased as the layer is positioned farther from the center of the second optical fiber, respectively. As a result, the residual twist applied to the second optical fiber is increased, while the polarization mode dispersion thereof is decreased.

The polarization mode dispersion of optical fibers, which is a phenomenon caused by birefringence, is due to internal factors, including the non-circle ratio of a core, the difference in the refractive index, and the application of asymmetric stress during drawing, as well as external factors, including the optical fibers' bending, torsion, temperature, and humidity. Specifically, if the number of turns exceeds a critical point, the polarization mode dispersion is increased due to shear stress. According to a recent international standard, ITU-T, it is recommended to restrict the cable polarization mode dispersion link design value (Cable PMDg), regarding optical fibers of G.652.B and G.652.D, within 0.2ps / $\sqrt{km}$. As such, stricter requirements are imposed on the polarization mode dispersion. If the number of turns exceeds 1.5 turn/M, it is difficult to fabricate a ribbon optical fiber by twisting it. Accordingly, it is important to maintain the residual twist of optical fibers appropriately in order to control the polarization mode dispersion according to the present invention.

Hereinafter, a spin that is applied to the second optical fiber will be referred to as a "residual twist," and the number of residual twists per unit length that is applied to the third optical fiber will be referred to as "number of turns."

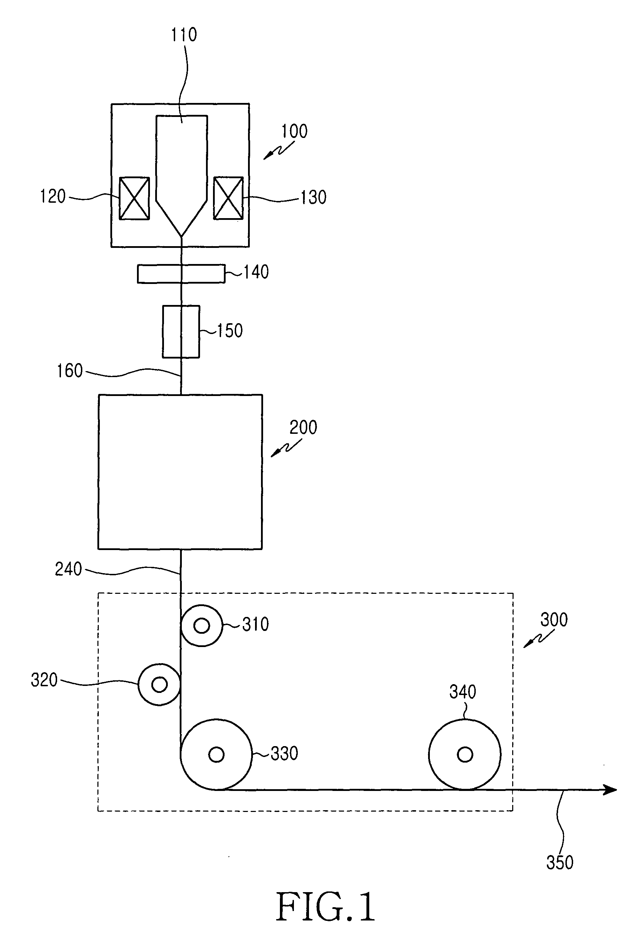

FIG. 1 shows the construction of an apparatus for drawing an optical fiber according to the present invention. As shown, the apparatus comprises a heating furnace 100 for heating an optical fiber preform 110; a coating unit 200 for forming a second optical fiber 240, which has at least one coating layer formed thereon; a spin unit 300 for forming a third optical fiber 350, which incorporates a twist in a predetermined direction; an outer diameter measuring device 140; and, a cooler 150.

The heating furnace 100 includes at least one heater 120, 130 for heating a lower portion of the optical fiber preform 110.

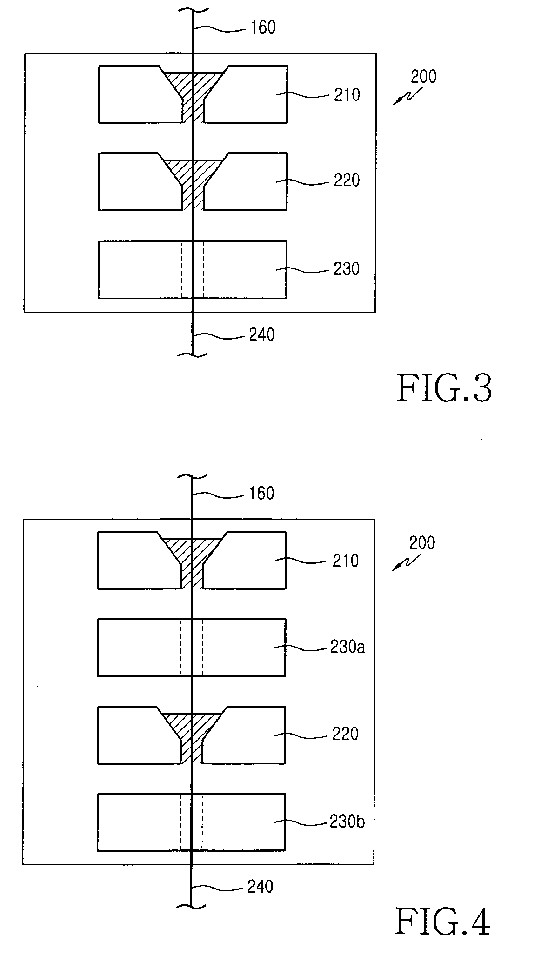

The coating unit 200 may be configured either as a wet-on-wet type or as a wet-on-dry type, according to how the coating layers, which are formed on the first optical fiber 160, are cured. The construction of each of the coating units 200 will now be described with reference to FIGs. 3 and 4, respectively.

FIG. 3 shows the wet-on-wet type construction of the coating unit 200 shown in FIG. 1. As shown, the coating unit 200 includes a first coating machine 210 for passing the first optical fiber 160 through a coating liquid consisting of a UV-curable polymer material; a second coating machine 220 for passing the first optical fiber 160 through a coating liquid consisting of a UV-curable polymer material with the viscosity lower than that of the first coating machine 210; and, a UV lamp 230 for curing the coating layer of the first optical fiber 160 to form a second optical fiber 240, which has coating layers of a multi-layered structure.

FIG. 4 shows the wet-on-dry type construction of the coating unit 200 shown in FIG. 1. As shown, the coating unit 200 includes a first coating machine 210 for passing the first optical fiber 160 through a coating liquid consisting of a UV-curable polymer material; a first UV lamp 230a for curing the coating layer of the first optical fiber 160, which has passed the first coating machine 210; a second coating machine 220 for passing the first optical fiber 160 through a coating liquid consisting of a UV-curable polymer material and the viscosity of which is lower than that of the first coating machine 210; and, a second UV lamp 230b for curing the coating layer of the first optical fiber 160 to form a second optical fiber 240, which has coating layers of a multi-layered structure.

The UV-curable polymer, as shown in FIGs. 3 and 4, may include a acrylate-based material or a vinyl-based material. By adjusting the viscosity of each of the coating liquids in a different manner, which are injected to the first and second coating machines 210 and 220 respectively, it is possible to regulate the degree of residual twist, which is applied to the second optical fiber 240 via a spin wheel. Further, by adjusting the intensity of the UV lamps 230, 230a, 230b, it is also possible to regulate the degree of residual twist, which is applied to the second optical fiber 240 via a spin wheel 330, as well as the degree of the polarization mode dispersion of the third optical fiber 350.

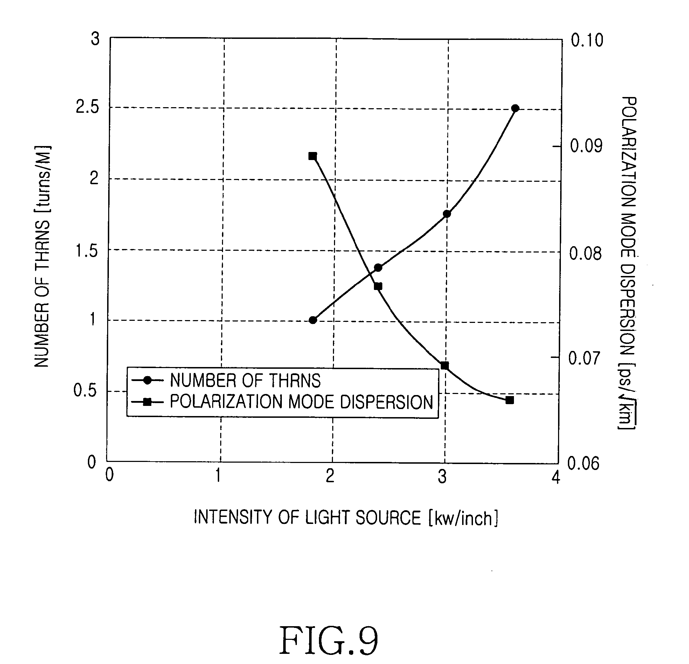

FIG. 9 is a graph illustrating the relationship between the polarization mode dispersion and the number of turns according to changes in the intensity of a UV lamp. As shown, as the intensity of the UV lamp increases, the residual twist applied to the second optical fiber is increased, while the polarization mode dispersion of the third optical fiber is decreased.

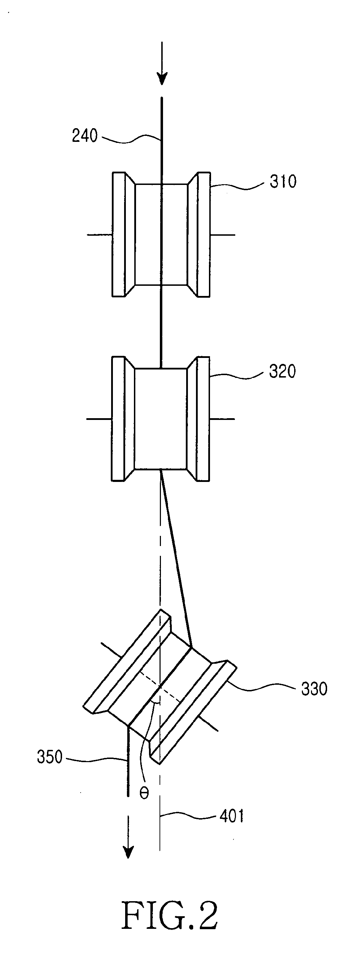

FIG. 2 shows the construction of the spin unit 300 shown in FIG. 1. As shown, the spin unit 300 includes a spin wheel 330, a guide wheel 320, an auxiliary wheel 310, and a capstan for controlling the drawing rate of the first, second, and third optical fibers 160, 240, and 350.

The spin wheel 330 is adapted to draw the second optical fiber 240 in a predetermined direction slanted relative to a drawing axis 401 of the first optical fiber 160, so that the second optical fiber 240 is made to incorporate a residual twist in a direction to obtain the third optical fiber 350. The spin wheel 330 is slanted at an angle clockwise or counterclockwise about the drawing axis 401, along which the first and second optical fibers 160, 240 are drawn, so that the second optical fiber 240 is made to incorporate a residual twist to obtain the third optical fiber 350.

The guide wheel 320 is positioned parallel to the drawing axis 401 between the spin wheel 330 and the coating unit 200 to guide the second optical fiber 240, which is inputted to the spin unit 330 from the coating unit 200, so that it does not to go out of its path along the drawing axis 401 due to the spin wheel 330. In other words, the guide wheel 320 guides the second optical fiber 240 to travel along the drawing axis 401 between the spin wheel 330 and the coating unit 200.

The auxiliary wheel 310 is positioned parallel to the drawing axis 401 between the guide wheel 320 and the coating unit 200, and is adapted to control excessive rotational force caused by an angle difference between the spin wheel 330 and the drawing axis 401.

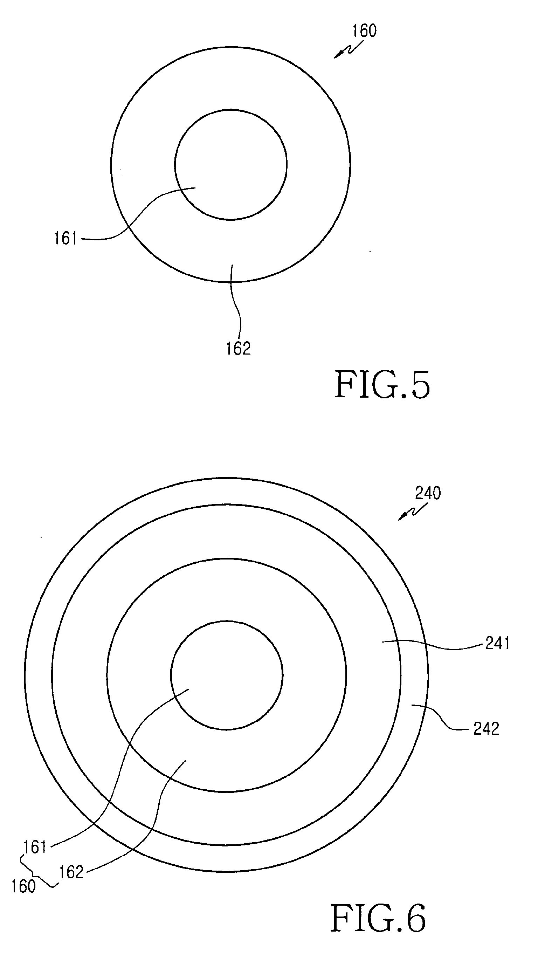

FIG. 5 is a sectional diagram showing the first optical fiber shown in FIG. 1. As shown, the first optical fiber 160 includes a core 161, which is positioned in its center portion, and a clad 162, which surrounds the outer peripheral surface of the core 161.

FIG. 6 is a sectional diagram showing the second optical fiber shown in FIG. 1. As shown, the second optical fiber 240 includes a first optical fiber 160, as well as first and second coating layers 241 and 242, which surround the outer peripheral surface of the clad 162.

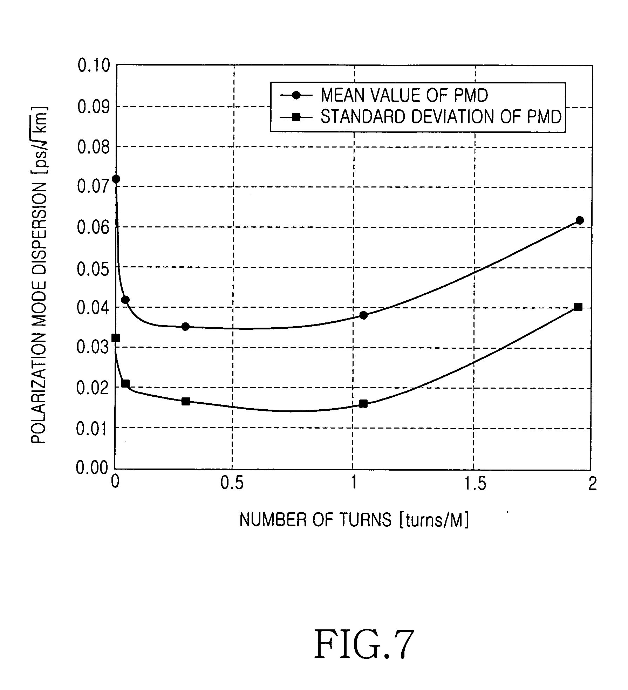

FIG. 7 is a graph illustrating the distribution of the means and the standard deviations of the polarization mode dispersion values of optical fibers according to the present invention. FIG. 7 presents the measurements of the polarization mode dispersion of a plurality of optical fibers fabricated according to the present invention, and shows the change in polarization mode dispersion vs. number of turns which the optical fibers have. As the number of turns is increased, the polarization mode dispersion is decreased. However, if the number of turns exceeds a critical point, the polarization mode dispersion is increased due to shear stress.

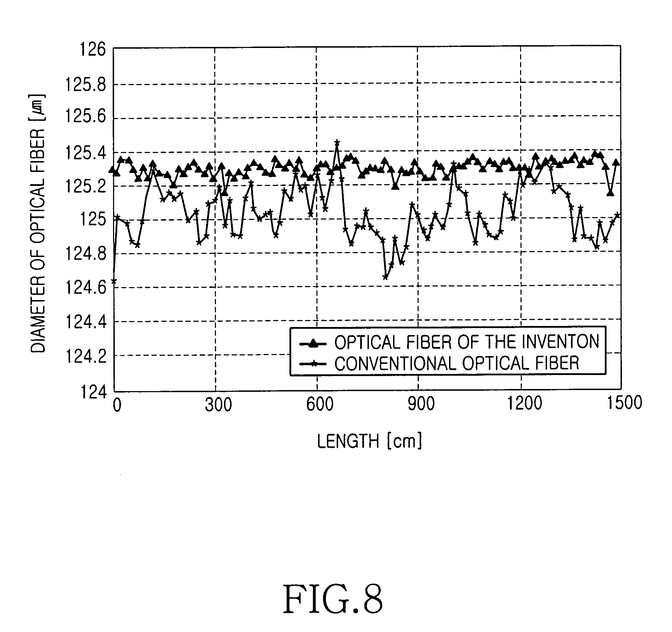

FIG. 8 is a graph illustrating the difference between the present invention and the prior art in terms of changes in diameter vs. length of optical fibers. As shown, optical fibers according to the present invention exhibit an even distribution with a standard deviation of ± 0.04 μm, while optical fibers fabricated according to the prior art exhibit severe irregularity with a standard deviation of ± 0.15 μm.

As it is apparent in the foregoing, the present invention is advantageous in that it is possible to regulate the degree of twist applied to optical fibers, by coating the optical fibers with a plurality of coating liquids with different viscosity and selectively adjusting the viscosity of the coating liquids. In addition, it is easy to make the optical fibers incorporate a twist, since the twist is given in a predetermined direction. Furthermore, it is possible to fabricate optical fibers that have stable characteristics to compensate for the polarization mode dispersion.

While the invention has been shown and described with reference to certain preferred embodiments thereof, it will be understood by those skilled in the art that various changes in form and details may be made therein without departing from the spirit and scope of the invention as defined by the appended claims.

## Claims

1.   A method for drawing an optical fiber, the method comprising the steps of:

(a) heating one end of an optical fiber preform to draw an optical fiber;

(b) coating a plurality of layers having a different viscosity on an outer peripheral surface of the optical fiber; and,

(c) by drawing the coated optical fiber in a slated direction by a predetermined angle.

2.   The method as claimed in claim 1, wherein the step (b) of coating the outer peripheral surface of the optical fiber with a different viscosity is performed a predetermined number of times.

3.   The method as claimed in claim 1, wherein each of the coating layers is formed with a coating liquid, the viscosity of which is gradually decreased as the layer is positioned farther from the center of the optical fiber.

4.   The method as claimed in claim 3, wherein the coating liquids include polymer acrylate materials having a different viscosity.

5.   The method as claimed in claim 3, wherein the coating liquids include curable polymer materials having a different viscosity.

6.   The method as claimed in claim 3, wherein the coating liquids include polymer vinyl materials having a different viscosity.

7.   An apparatus for drawing an optical fiber, comprising:

a heating furnace for heating an optical fiber preform;

a coating unit for coating a first optical fiber, which is drawn from the heating furnace, and providing it with at least one coating layer having a different viscosity on its outer peripheral surface to form a second optical fiber; and,

a spin unit for making the second optical fiber incorporate a twist in a direction to form a third optical fiber, the spin unit having a spin wheel for drawing the second optical fiber with a predetermined angle slanted relative to a drawing axis of the first optical fiber to form the third optical fiber.

8.   The apparatus as claimed in claim 7, wherein the spin unit further includes:

a guide wheel positioned parallel to the drawing axis between the spin wheel and the coating unit to guide the second optical fiber, which is inputted to the spin unit from the coating unit, so that it travels along the drawing axis and does not go out of its path due to the spin wheel;

an auxiliary wheel positioned parallel to the drawing axis between the guide wheel and the coating unit to apply a constant twist to the second optical fiber from the spin wheel; and,

a capstan for controlling the drawing rate of the first, second, and third optical fibers.

9.   The apparatus as claimed in claim 7, further comprising:

an outer diameter measuring device for measuring the outer diameter of the first optical fiber, which is drawn from the heating furnace; and

a cooler for cooling the first optical fiber, which has passed the outer diameter measuring device.

10.   The apparatus as claimed in claim 7, wherein the coating unit includes:

a first coating machine for moving the first optical fiber through a coating liquid, which consists of a UV-curable polymer material;

a second coating machine for moving the first optical fiber, which has passed the first coating machine, through a coating liquid, which consists of a UV-curable polymer material and the viscosity of which is lower than that of the first coating machine; and,

a UV lamp for curing the coating layer of the first optical fiber, which has passed the second coating machine, to form a second optical fiber, which has coating layers of a multi-layered structure.

11.   The apparatus as claimed in claim 10, wherein the UV-curable polymer includes an acrylate-based material or a vinyl-based material.

**12.** The apparatus as claimed in claim 7, wherein the coating unit includes:

> a first coating machine for coating the first optical fiber with a coating liquid, which consists of a UV-curable polymer material;
>
> a first UV lamp for curing the coating layer of the first optical fiber, which has passed the first coating machine;
>
> a second coating machine for coating the first optical fiber, which has passed the first UV lamp, with a coating liquid, which consists of a UV-curable polymer material and the viscosity of which is lower than that of the first coating machine; and,
>
> a second UV lamp for curing the coating layer of the first optical fiber, which has passed the second coating machine, to form a second optical fiber, which has coating layers of a multi-layered structure.

**13.** The apparatus as claimed in claim 7, wherein the residual twist of the third optical fiber is selectively controlled to be under 1.5 turn/M.

**14.** The apparatus as claimed in claim 7, wherein the third optical fiber has a cable polarization mode dispersion link design value of 0.2 $ps / \sqrt{km}$ or less.

110

100

120    130

~140

~150

160

200

240

310

320

340

330

350

# FIG.1

240

310

320

330

350

θ

401

# FIG.2

FIG.3

FIG.4

FIG.5

FIG.6

FIG.7

FIG.8

FIG.9